# EUROPEAN PATENT APPLICATION

(11) **EP 3 581 366 A1**
(43) Date of publication of application: **18.12.2019**
(21) Application number: 19176576.7
(22) Date of filing: 24.05.2019
(51) Int. Cl.: B29C 64/112, B29C 64/236, B29C 64/245, B29C 64/35, B29C 64/364, B33Y 10/00, B33Y 30/00, B33Y 40/00, B08B 3/04

(54) **SHAPING APPARATUS AND SHAPING METHOD**

(30) Priority: 12.06.2018 JP 2018111665
(71) Applicant: Mimaki Engineering Co., Ltd., Tomi-city Nagano 389-0512 (JP)
(72) Inventor: FURUSE, Masayuki, Tomi-city, Nagano (JP); IMAI, Kenta, Tomi-city, Nagano (JP); MATSUSHIMA, Takuya, Tomi-city, Nagano (JP); OKAWA, Masakatsu, Tomi-city, Nagano (JP)
(74) Representative: Bandpay & Greuter

(57) **Abstract**

A shaping apparatus (10) that shapes a three-dimensional shaped object includes inkjet heads (12) which are shaping material heads that eject materials of the shaped object (50); an inkjet head which is a support material head that ejects a material of a support layer (52) that supports at least one part of the shaped object being shaped; and a moving means (18) that moves the shaped object together with the support layer toward a removal tank (60), which is a container for accommodating the shaped object at the time of removing the support layer.

## Description

### TECHNICAL FIELD

The present disclosure relates to a shaping apparatus and a shaping method.

### DESCRIPTION OF THE BACKGROUND ART

Conventionally, a shaping apparatus (3D printer) for shaping a shaped object using an inkjet head is known (see, e.g., Japanese Unexamined Patent Publication No. 2015-071282). In such a shaping apparatus, for example, the shaped object is shaped through the layered shaping method by overlapping a plurality of layers of ink formed by the inkjet head.

### SUMMARY

When shaping a shaped object in the shaping apparatus, a support layer needs to be formed at the periphery and the like of the shaped object depending on the shape of the shaped object. In this case, the support layer is, for example, a structural object formed to support at least a part of the shaped object being shaped. The support layer is formed during shaping, as necessary, and thereafter removed. Furthermore, as a material of the support layer, for example, material (e.g., water-soluble material) that can be removed using a predetermined liquid etc. are used.

However, the removal of the support layer may take, for example, a long time of several hours to several days. Therefore, conventionally, when performing shaping by forming a support layer, it was desired to remove the support layer more efficiently. The present disclosure thus provides a shaping apparatus and a shaping method that can overcome such problem.

The inventors of the present application conducted intensive research on a method of more efficiently removing the support layer. Then, regarding the time required to remove the support layer, focus was made on the fact that the time to start the removal of the support layer often becomes longer other than the time of actually removing the support layer. More specifically, when causing a shaping apparatus to shape a shaped object, the shaping is performed in a state in which an operator is absent, for example, at night. Then, in this case, usually, after the operator confirms the completion of shaping in the next morning or the like, the removal of the support layer is started. Therefore, even if shaping is completed, for example, at night, the removal of the support layer is started after the next morning.

On the other hand, the inventors of the present application have considered to automatically start the removal of the support layer after completion of shaping in the shaping apparatus, without confirmation by the operator, manual operation of the operator, or the like. Furthermore, as a configuration therefor, consideration has been made use a moving means for automatically moving a shaped object toward a removal tank used for removing the support layer. With such a configuration, for example, the removal of the support layer can be started after completion of the operation of layering the material of the shaped object without leaving extra time. Moreover, for example, the removal of the support layer thus can be performed efficiently and appropriately.

Furthermore, the inventors of the present application have found, through further intensive research, the features necessary for obtaining such effects, and contrived the present disclosure. In order to solve the above-mentioned problem, the present disclosure provides a shaping apparatus that shapes a three-dimensional shaped object, the shaping apparatus including a shaping material head that ejects a material of the shaped object; a support material head that ejects a material of a support layer that supports at least one part of the shaped object being shaped; and a moving means that moves the shaped object together with the support layer toward a removal tank, which is a container for accommodating the shaped object at the time of removing the support layer.

With this configuration, for example, the shaped object can be appropriately moved into the removal tank after the completion of shaping. Moreover, in this case, since the shaped object can be quickly moved to the removal tank after the completion of shaping, for example, removal of a support layer can be started at an early stage. Moreover, for example, the removal of the support layer thus can be performed efficiently and appropriately.

Here, in this configuration, the time of removal of the support layer is, for example, at least a part of a period in which the operation of removing the support layer is performed. Moreover, after completion of shaping is, for example, after completion of an operation of shaping performed using the shaping material head and the support material head. Furthermore, in this configuration, for example, the moving means automatically moves the shaped object without requiring the operation of the operator, and the like. The removal tank is, for example, a container filled with a substance used for removing the support layer. More specifically, when using a substance that dissolves by a predetermined liquid (e.g., water etc.) as the material of the support layer, it is conceivable to use a container that stores such liquid as the removal tank.

Moreover, in the shaping apparatus, it is conceivable to shape a shaped object, for example, using the shaping table that supports the shaped object being shaped. In this case, the shaping material head and the support material head form the shaped object and the support layer on the shaping table, for example, by ejecting the material of the shaped object and the material of the support layer at a position facing the shaping table. In this case, it is conceivable that the moving means reverses the shaping table as an operation of moving the shaped object toward the removal tank. More specifically, in this case, for example, the removal tank is installed on the side opposite to the shaping material head and the support material head with respect to the shaping table. Furthermore, in this case, the shaping material head and the support material head are installed, for example, on the upper side than the shaping table in the gravity direction. Moreover, the removal tank is installed, for example, on the lower side than the shaping table. In this case, it is conceivable to use, for example, a container in which the upper side is opened as the removal tank. In this case, for example, the moving means reverses the shaping table with the side on which the shaped object is formed in the shaping table facing the removal tank side to move the shaped object toward the removal tank along with the support layer. According to such a configuration, for example, the support layer and the shaped object can be appropriately moved toward the removal tank.

Furthermore, more specifically, in this case, for example, the removal tank is installed at a position facing the shaping material head and the support material head with the shaping table interposed therebetween. With such a configuration, for example, the support layer and the shaped object can be appropriately accommodated in a removal tank by reversing a shaping table. Moreover, the removal tank may, for example, be installed on the outer side of the position facing the shaping material head and the support material head. In this case, for example, the moving means reverses the shaping table after moving the shaping table in a state in which the shaped object is supported to the outer side of the position facing the shaping material head and the support material head. Even when configured in such a manner, for example, the support layer and the shaped object can be appropriately accommodated in a removal tank.

Moreover, when automatically moving the shaped object and the support layer toward the removal tank using the moving means, the shaping of a new shaped object may be started after the shaped object and the like have been moved. In this case, for example, it is conceivable to shape a plurality of shaped objects sequentially using a plurality of shaping tables. More specifically, in this case, the moving means, for example, installs a shaping table, which supports a shaped object being shaped, at a head facing position which is a position facing the shaping material head and the support material head before the shaping of the shaped object is started. Then, after the completion of shaping, the shaped object is moved toward the removal tank while being supported by the shaping table. Furthermore, after the shaping table supporting the shaped object is moved from the head facing position toward the removal tank, the moving means installs another shaping table to be used at the time of shaping a next shaped object at the head facing position. According to such a configuration, after the completion of shaping of one shaped object, the operation of shaping the next shaped object can be appropriately started.

In this case, the removal tank is preferably replaced as necessary. More specifically, in this case, for example, it is conceivable to further use a removal tank installing means that installs the removal tank at the removal tank installing position. The removal tank installing position is, for example, a position set as a position where the removal tank is to be installed at a destination to where the shaped object is moved by the moving means. Moreover, in this case, for example, after the removal tank installed at the removal tank installing position accommodates the shaped object, the removal tank installing means moves the removal tank to a position other than the removal tank installing position. Another removal tank that is to accommodate the next shaped object is then installed at the removal tank installing position. According to such a configuration, for example, in the case in which a plurality of shaped objects are sequentially shaped, the support layer can be more efficiently removed by using a plurality of removal tanks. Moreover, in this case, the replacement of the removal tank may not necessarily be performed for each one of the shaped object, but may be performed when the removal tank accommodates a predetermined number of shaped objects.

Furthermore, the moving means may move the shaped object, for example, by driving a belt member or the like. In this case, for example, it is conceivable to use a belt member or the like in which at least one part faces the shaping material head and the support material head. Further, in this case, the shaping material head and the support material head form the shaped object and the support layer on the belt member, for example, by ejecting the material of the shaped object and the material of the support layer toward the belt member. Then, the moving means moves the shaped object and the support layer together with the belt member by, for example, moving the belt member on which the shaped object and the support layer are mounted. According to such a configuration, for example, the shaped object and the support layer can be appropriately moved.

Moreover, in this case, it is conceivable to use, for example, a mesh-like member in which a plurality of holes through which at least the material of the support layer can pass is formed as the belt member. When, for example, detaching the shaped object and the support layer from the belt member, the detachment can be more easily and appropriately carried out by using such belt member. Thus, for example, when detaching the shaped object and the support layer from the belt member automatically, to accommodate them into the removal tank, and the like, the detachment of the shaped object and the like can be more reliably carried out. In this case, it is conceivable to further use a table-shaped member, as a shaping table, facing the shaping material head and the support material head with the belt member interposed therebetween. Furthermore, in this case, for example, it is conceivable to install the belt member so that the material of the support layer that passed through the holes constituting the mesh comes in contact with the shaping table so that the belt member partially overlaps with the shaping table.

Moreover, in this case, a member having different adhesive property with respect to the material of a shaped object and the material of a support layer may be used as a shaping table and a belt member. According to such a configuration, for example, the adhesive property of the shaped object and the support layer with respect to the base portion can be adjusted, and the like by forming the shaped object and the support layer so that at least one of the shaped object and the support layer makes contact with the belt member and the shaping table. Further, in this case, with regard to the adhesive property with respect to the material of the shaped object and the material of the support layer, it is conceivable to make the adhesive property of the shaping table larger than the adhesive property of the belt member. When configured in such a manner, for example, the detachment of the shaped object and the like from the belt member can be facilitated after the shaped object and the support layer are separated from the shaping table by the movement of the belt member while maintaining the shaped object and the like with high adhesion using the adhesive property of the shaping table at the time of shaping of the shaped object.

Moreover, in this case, for example, the peeling of the shaped object and the like from the shaping table may be performed by moving the belt member by the moving means. In this case, the shape of the hole constituting the mesh is preferably a shape that allows such peeling to be easily performed. More specifically, in this case, for example, each of the plurality of holes of the belt member may be considered as a tapered hole in which a width in a direction orthogonal to a moving direction in which the moving means moves the belt member gradually widens from one side to the other side in the moving direction. Moreover, the tapered hole is more preferably a hole in which the width gradually widens from a back side toward a front side in the moving direction in a case in which the shaped object is moved toward the removal tank. According to this structure, the shaped object and the like can be more appropriately peeled from the shaping table by moving the belt member.

Furthermore, the belt member may be an endless belt that circles along a path including the position facing the shaping material head and the support material head. In this case, for example, it is conceivable to move the belt together with the shaped object or the like so that the shaped object falls into the removal tank when passing the curved portion in the path. According to this configuration, the shaped object and the like can be appropriately detached from the belt member using a curved portion (portion R) of the belt. In addition, the detached shaped object or the like can be appropriately accommodated in the removal tank.

In the removal tank, the removal of the support layer is not necessarily completed, and consideration is made to soften the support layer to, for example, facilitate the removal of the support layer to be subsequently performed. For example, when using the material of the support layer that dissolves by water, the support layer may be softened by bringing the support layer into contact with water vapor (steam). Therefore, in such a case, it is also conceivable to use, for example, a container (e.g., steam tank) in which at least the support layer is softened by water vapor as the removal tank. Moreover, when softening the support layer using the water vapor, a container having a drainage port on a lower side in the gravity direction, for example, is preferably used as a removal tank. According to such a configuration, for example, the water vapor can be more appropriately used for the removal of the support layer.

Use of a shaping method having the features similar to above, and the like can be considered for the configuration of the present disclosure. In this case as well, for example, effects similar to the above can be obtained.

According to the present disclosure, the removal of the support layer can be performed efficiently and appropriately.

### BRIEF DESCRIPTION OF THE DRAWINGS

FIGs. 1A and 1B are views showing one example of a shaping apparatus 10 according to one embodiment of the present disclosure. FIG. 1A shows one example of a configuration of a main part of the shaping apparatus 10. FIG. 1B shows an example of the configuration of a head unit 12 in the shaping apparatus 10.
FIGs. 2A to 2C are views describing an operation of moving a shaped object 50 and a support layer 52 to a removal tank 60. FIGs. 2A to 2C show one example of a state at each timing in an operation of moving the shaped object 50 and the support layer 52 to the removal tank 60.
FIGs. 3A and 3B are views describing an operation of moving the shaped object 50 and the support layer 52 to the removal tank 60. FIGs. 3A and 3B show one example of a state at each timing in an operation of moving the shaped object 50 and the support layer 52 to the removal tank 60.
FIGs. 4A and 4B are views describing a modified example of the configuration of the shaping apparatus 10. FIGs. 4A and 4B are a side view and a top view showing one example of a configuration of a main part of the shaping apparatus 10 in the present modified example.
FIGs. 5A and 5B are views describing a further modified example of the configuration of the shaping apparatus 10. FIGs. 5A and 5B are a side view and a top view showing one example of a configuration of a main part of the shaping apparatus 10 in the present modified example.
FIGs. 6A and 6B are views showing one example of a more specific configuration of an endless belt 32. FIGs. 6A and 6B are a top view and a side cross-sectional view of the endless belt 32, respectively.
FIG. 7 is a view describing a further modified example of the configuration of the shaping apparatus 10.
FIGs. 8A and 8B are views describing a modified example of the configuration of the removal tank 60. FIG. 8A shows one example of the configuration of the removal tank 60 in a case where the support layer 52 is softened using water vapor. FIG. 8B shows another example of the configuration of the removal tank 60 in a case where the support layer 52 is softened using water vapor.

### DETAILED DESCRIPTION OF EMBODIMENTS

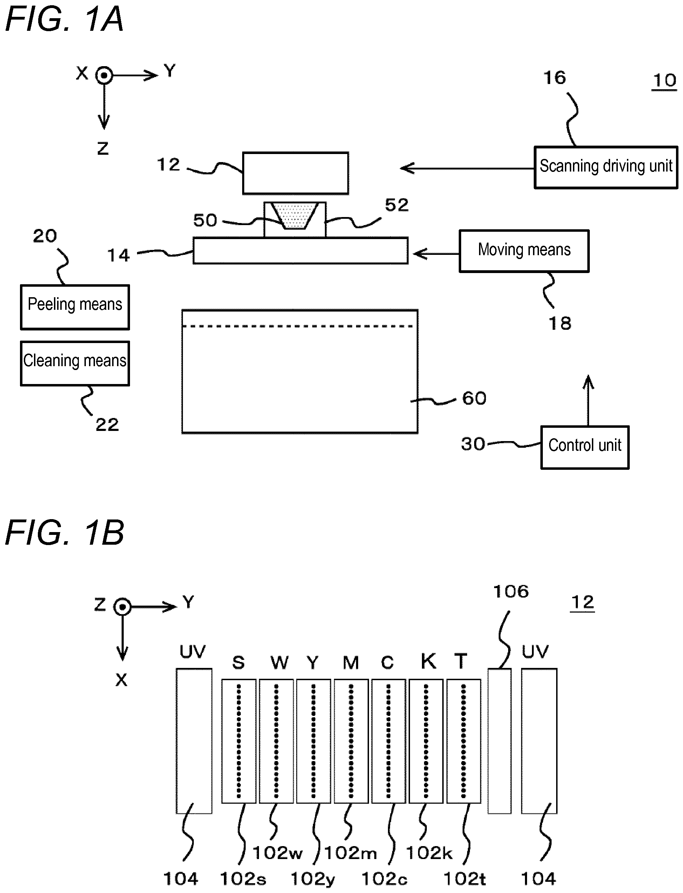

Hereinafter, an embodiment according to the present disclosure will be described with reference to the drawings. FIGs. 1A and 1B shows one example of a shaping apparatus 10 according to one embodiment of the present disclosure. FIG. 1A shows one example of a configuration of a main part of the shaping apparatus 10. FIG. 1B shows an example of the configuration of a head unit 12 in the shaping apparatus 10.

Other than the points described below, the shaping apparatus 10 may have a configuration same as or similar to a known shaping apparatus. More specifically, other than the points described below, the shaping apparatus 10 may have a configuration same as or similar to, for example, a known shaping apparatus that carries out shaping by ejecting a droplet to become the material of a shaped object 50 using an inkjet head. Furthermore, other than the illustrated configuration, the shaping apparatus 10 may also include, for example, various types of configurations necessary for shaping, and the like of the shaped object 50.

In the present example, the shaping apparatus 10 is a shaping apparatus (3D printer) that shapes a three-dimensional shaped object 50 by a layered shaping method. In this case, the layered shaping method is, for example, a method of shaping the shaped object 50 by overlapping a plurality of layers. The shaped object 50 means, for example, a three-dimensional structural object. Furthermore, in the present example, the shaping apparatus 10 includes a head unit 12, a shaping table 14, a scanning driving unit 16, a moving means 18, a peeling means 20, a cleaning means 22, and a control unit 30.

The head unit 12 is a portion that ejects the material of the shaped object 50. In the present example, ink is used as the material of the shaped object 50. In this case, the ink is, for example, a functional liquid. Furthermore, in the present example, the ink can also be regarded as, for example, a liquid to be ejected from the inkjet head or the like. In this case, the inkjet head is, for example, an ejection head that ejects ink droplets through an inkjet method. More specifically, the head unit 12 ejects ink that cures according to a predetermined condition from a plurality of inkjet heads as a material of the shaped object 50. Then, by curing the ink after landing, the respective layers constituting the shaped object 50 are overlapped and formed. Moreover, in the present example, an ultraviolet curable ink (UV ink) that cures from a liquid state by irradiation of ultraviolet light is used as the ink.

Furthermore, the head unit 12 further ejects a material of a support layer 52 in addition to the material of the shaped object 50. The head unit 12 thereby forms the support layer 52 at a periphery of the shaped object 50 and the like, as necessary. The support layer 52 is, for example, a layered structural object that supports the shaped object 50 by surrounding the outer periphery of the shaped object 50 being shaped. The support layer 52 is, for example, formed under an overhang shape part during shaping, for example, in the case of shaping the shaped object 50 having an overhang shape. Furthermore, the support layer 52 can also be considered as, for example, a structural object that supports at least a part of the shaped object 50 being shaped. The support layer 52 is formed as necessary at the time of shaping of the shaped object 50 and removed after the completion of the shaping. In this case, after the completion of the shaping is, for example, after the completion of the operation of shaping performed using the inkjet head.

The shaping table 14 is a table-shaped member that supports the shaped object 50 being shaped, and is disposed at a position facing the inkjet head in the head unit 12, and has the shaped object 50 being shaped placed on the upper surface thereof. Furthermore, in the present example, the shaping table 14 has a configuration in which at least the upper surface is movable in a layering direction (Z direction in the figure), and moves at least the upper surface in accordance with the progress of the shaping of the shaped object 50 by being driven by the scanning driving unit 16. In this case, the layering direction means, for example, a direction in which the material of shaping is layered in the layered shaping method. More specifically, in the present example, the layering direction is a direction orthogonal to a main scanning direction (Y direction in the figure) and a sub scanning direction (X direction in the figure) set in advance in the shaping apparatus 10. Furthermore, in the present example, the shaping table 14 is further disposed in a reversible manner, and by being driven by the moving means 18, changes the orientation so that the surface (upper surface) facing the upper side in the gravity direction before the reverse is directed toward the lower side.

In the present example, the shaping table 14 is a fixing table fixed to the shaping apparatus 10 so that only movement and rotation within a predetermined range are possible. In this case, the fixing table is, for example, a table in which the relative position of any part of the shaping table is fixed with respect to any part of the shaping apparatus 10. Moreover, the fixing table can also be considered as, for example, a table installed in the shaping apparatus 10 using a fixing member, and the like. In this case, to be installed in the shaping apparatus 10 using the fixing member means, for example, to be installed in the shaping apparatus 10 using a member or the like for preventing drop from the shaping apparatus 10 or the like. Moreover, in a modified example of the shaping apparatus 10, for example, consideration is made to using a tray-shaped shaping table 14 which can be removed more easily. In this case, the tray-shaped shaping table 14 is, for example, the shaping table 14 installed on the shaping apparatus 10 by being placed at a predetermined position in the shaping apparatus 10. Furthermore, in this case, the shaping table 14 can also be considered as a member or the like to be used as necessary at the time of shaping, instead of a part of the shaping apparatus 10. The example in the case of using such a tray-shaped shaping table 14 will be described in more detail later.

The scanning driving unit 16 is a driving unit that causes the head unit 12 to perform a scan of relatively moving with respect to the shaped object 50 being shaped. In this case, "relatively moving with respect to the shaped object 50 being shaped" means, for example, relatively moving with respect to the shaping table 14. Causing the head unit 12 to perform a scan means, for example, causing the inkjet head of the head unit 12 to perform a scan. Furthermore, in the present example, the scanning driving unit 16 causes the head unit 12 to perform a main scan (Y scanning), a sub scan (X scanning), and a layering direction scanning (Z scanning).

In this case, the main scan is, for example, an operation of ejecting ink while moving in the main scanning direction relatively to the shaped object 50 being shaped. The sub scan is, for example, an operation of relatively moving with respect to the shaped object 50 being shaped in the sub scanning direction orthogonal to the main scanning direction. The sub scan can also be considered as, for example, an operation of relatively moving with respect to the shaping table 14 in the sub scanning direction by a preset feed amount. Furthermore, the scanning driving unit 16 causes the head unit 12 to perform the sub scan, for example, between the main scans. The layering direction scanning is, for example, an operation of moving the head unit 12 relatively in the layering direction with respect to the shaped object 50 being shaped. The scanning driving unit 16 adjusts the relative position of the inkjet head with respect to the shaped object 50 being shaped in the layering direction by causing the head unit 12 to perform the layering direction scanning in accordance with the progress of the shaping operation.

The moving means 18 is a structure for moving the shaped object 50 toward a removal tank 60, and after completion of the shaping operation performed in the shaping apparatus 10 (after completion of shaping), the shaped object 50 is moved together with the support layer 52 toward the removal tank 60. In this case, the removal tank 60 is a container that accommodates the shaped object 50 at the time of removing the support layer 52. The removal tank 60 can also be considered as, for example, a container filled with a substance used for removing the support layer 52. Furthermore, the time of removing the support layer 52 is, for example, the time of an operation of removing the support layer 52 formed during shaping in the shaping apparatus 10. The time of removing the support layer 52 can also be considered, for example, at least a part of a period in which the operation of removing the support layer 52 is performed.

More specifically, in the present example, a water-soluble material that dissolves in water is used as a material of the support layer 52. In this case, the water-soluble material is an example of a substance that can be dissolved by a predetermined liquid. Furthermore, water is an example of a support removal liquid which is a liquid used to remove the material of the support layer 52. Water can also be considered as an example of a liquid that dissolves the support layer 52. Furthermore, in this case, a water tank (bath) which is a container for storing water is used as the removal tank 60. In this case, it is conceivable to complete the removal of the support layer 52 by putting the shaped object 50 in the removal tank 60 until all the support layer 52 is dissolved.

Note that, as described above, the time of removing the support layer 52 can also be considered as, for example, at least a part of a period in which the operation of removing the support layer 52 is performed. Therefore, the removal tank 60 may accommodate the shaped object 50 not necessarily until all the support layer 52 is dissolved, but for example, until the support layer 52 is dissolved to some extent. In this case, after taking out the shaped object 50 from the support layer 52, for example, it is conceivable to remove the remaining support layer 52 as needed.

Furthermore, in the present example, the moving means 18 automatically moves the shaped object 50 toward the removal tank 60 without, for example, requiring the operation of the operator and the like. In this case, moving the shaped object 50 toward the removal tank 60 means, for example, moving the shaped object 50 to a position to be accommodated in the removal tank 60. The position to be accommodated in the removal tank 60 is, for example, a position at where the shaped object 50 is accommodated in the removal tank 60 without requiring the operation of the operator or the like thereafter. More specifically, in the present example, the moving means 18 moves the shaped object 50 together with the support layer 52 to a position where the shaped object 50 and the support layer 52 fall into the removal tank 60 by peeling off the shaped object 50 and the support layer 52 from the shaping table 14 by the peeling means 20 In addition, in a modified example of the configuration and operation of the shaping apparatus 10, the moving means 18 may directly move the shaped object 50 into the removal tank 60. The operation of moving the shaped object 50 toward the removal tank 60 using the moving means 18 will be described in more detail later.

The peeling means 20 is configured to peel off the shaped object 50 and the support layer 52 from the shaping table 14 before (e.g., immediately before) moving the shaped object 50 and the support layer 52 to the removal tank 60. The cleaning means 22 is a configuration (cleaning unit) for cleaning the shaping table 14 after the shaped object 50 and the support layer 52 are peeled off from the shaping table 14. Furthermore, in the present example, the peeling means 20 and the cleaning means 22 automatically perform the peeling off and cleaning operations without requiring the operation of the operator or the like. More specific operations of the peeling means 20 and the cleaning means 22 will also be described in more detail later, together with the operation of moving the shaped object 50 toward the removal tank 60 using the moving means 18.

The control unit 30 is, for example, a CPU of the shaping apparatus 10, and controls the operation of shaping in the shaping apparatus 10 by controlling each unit of the shaping apparatus 10. More specifically, the control unit 30 controls each unit of the shaping apparatus 10 based on, for example, shape information, color information, and the like of the shaped object 50 to be shaped. Furthermore, in the present example, after completion of shaping of the shaped object 50 performed using the inkjet head, the control unit 30 controls the operation of the moving means 18 and the peeling means 20 and the like to move the shaped object 50 together with the support layer 52 to the removal tank 60. According to the present example, the shaped object 50 can be appropriately shaped.

Subsequently, a more specific configuration of the head unit 12 will be described. In the present example, the head unit 12 includes a plurality of inkjet heads, a plurality of ultraviolet light sources 104, and a flattening roller 106. As shown in FIG. 1B, an inkjet head 102s, an inkjet head 102w, an inkjet head 102y, an inkjet head 102m, an inkjet head 102c, an inkjet head 102k, and an inkjet head 102t are provided as a plurality of inkjet heads. The plurality of inkjet heads are, for example, arranged side by side in the main scanning direction with their positions in the sub scanning direction aligned. Furthermore, each inkjet head includes a nozzle row, in which a plurality of nozzles are arranged in a predetermined nozzle row direction, on a surface facing the shaping table 14. Furthermore, in the present example, the nozzle row direction is a direction parallel to the sub scanning direction. Moreover, the plurality of inkjet heads in the head unit 12 eject the material of the shaped object 50 and the material of the support layer 52 at a position facing the shaping table 14. The shaped object 50 and the support layer 52 are thereby formed on the shaping table 14.

More specifically, among these inkjet heads, the inkjet head 102s is an example of a support material head, and ejects the material of the support layer 52. In the present example, a water-soluble material is used as described above as the material of the support layer 52. As such a material, for example, consideration is made to use an ultraviolet curable ink or the like which cure degree by the ultraviolet light is weaker than that of the material of the shaped object 50. Furthermore, for example, a known material for the support layer can be suitably used for the material of the support layer 52.

Furthermore, among the plurality of inkjet heads included in the head unit 12, inkjet heads other than the inkjet head 102s are an example of a shaping material head that ejects material of the shaped object 50. Furthermore, among these, the inkjet head 102w ejects ink of white color (W color). A white ink is used, for example, when forming a region (light reflecting region) having a property of reflecting light in the shaped object 50. Furthermore, in this case, the region of the interior of the shaped object 50 may also be formed with a white ink to be also used as a light reflecting region. Moreover, the region of the interior may be formed with an arbitrary material other than the material of the support layer 52.

The inkjet head 102y, the inkjet head 102m, the inkjet head 102c, and the inkjet head 102k are inkjet heads for coloring used at the time of shaping of the colored shaped object 50, and respectively eject ink of a plurality of colors (ink for coloring) used for coloring. More specifically, the inkjet head 102y ejects ink of yellow color (Y color). The inkjet head 102m ejects ink of magenta color (M color). The inkjet head 102c ejects ink of cyan color (C color). Furthermore, the inkjet head 102k ejects ink of black color (K color). In addition, in this case, each color of Y, M, C and K is an example of process colors used for full color representation. The inkjet head 102t is an inkjet head that ejects a clear ink, and ejects a clear ink. The clear ink is, for example, ink of clear color which is a colorless transparent color (T).

The plurality of ultraviolet light sources 104 are light sources (UV light sources) for curing the ink, and generate an ultraviolet light for curing the ultraviolet curable ink. Moreover, in the present example, each of the plurality of ultraviolet light sources 104 is disposed on one end side and the other end side in the main scanning direction in the head unit 12 so as to sandwich the arrangement of inkjet heads in between. For example, UVLED (ultraviolet LED) and the like can be suitably used for the ultraviolet light source 104. Furthermore, it is also conceivable to use a metal halide lamp, a mercury lamp, and the like for the ultraviolet light source 104. The flattening roller 106 is a flattening means for flattening the layer of ink formed during the shaping of the shaped object 50. The flattening roller 106 flattens the layer of ink by coming into contact with a surface of the layer of ink and removing one part of the ink before curing, for example, at the time of the main scan.

The layer of ink forming the shaped object 50 can be appropriately formed by using the head unit 12 having the above configuration. Furthermore, the shaped object 50 can be appropriately shaped by forming the plurality of layers of inks in an overlapping manner. In addition, the support layer 52 can be appropriately formed at the periphery of the shaped object 50 and the like, as necessary.

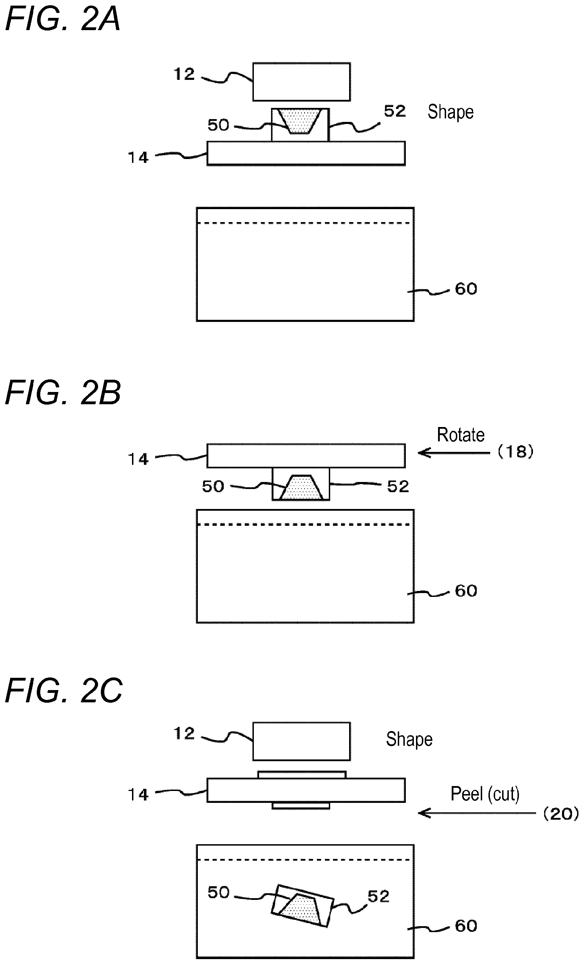

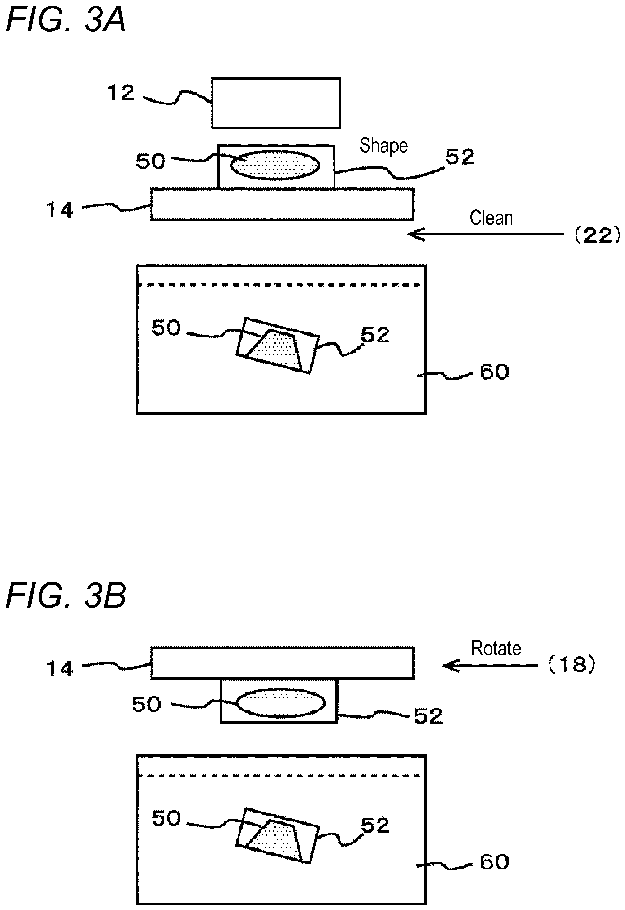

Subsequently, regarding the operation after forming the shaped object 50 and the support layer 52 using the respective inkjet heads in the head unit 12, the operation and the like for moving the shaped object 50 toward the removal tank 60 using the moving means 18 will be described in more detail. FIGs. 2 and 3 are figures describing the operation of moving the shaped object 50 and the support layer 52 to the removal tank 60 in the present example. FIGs. 2A to 2C and FIGs. 3A and 3B show one example of a state at each timing in an operation of moving the shaped object 50 and the support layer 52 to the removal tank 60.

Furthermore, more specifically, FIG. 2A shows an example of a state during shaping in which the shaping of the shaped object 50 is being performed in the shaping apparatus 10. In this case, the shaped object 50 and the support layer 52 are formed on the shaping table 14 by ejecting ink from each inkjet head in the head unit 12 toward the shaping table 14. Furthermore, in the present example, as shown in the figure, the support layer 52 is also formed on the lower side of the shaped object 50. In this case, the portion of the support layer 52 on the lower side of the shaped object 50 can be considered as, for example, a portion formed as a base of the shaped object 50 or the like. According to such a configuration, for example, the shaped object 50 can be appropriately formed on the shaping table 14 without directly bringing the shaping table 14 and the shaped object 50 into contact. Moreover, for example, at the time of peeling of the shaped object 50 from the shaping table 14 to be performed later, the shaped object 50 can be more appropriately peeled off while suppressing the influence on the shaped object 50.

Moreover, in the present example, a container in which the upper side of the gravity direction is opened is used as the removal tank 60. Then, as shown in the figure, the removal tank 60 is installed at a position facing each inkjet head in the head unit 12 with the shaping table 14 in between so as to be installed on a side opposite the head unit 12 with respect to the shaping table 14. In this case, the position of each inkjet head in the head unit 12 is on the upper side of the shaping table 14 in the gravity direction. Moreover, the removal tank 60 is installed on the lower side of the shaping table 14.

Furthermore, after completion of shaping in the shaping apparatus 10 performed using the head unit 12, the moving means 18 rotates the shaping table 14 with respect to a predetermined rotation axis to reverse the shaping table 14, as shown in FIG. 2B. In this case, reversing the shaping table 14 means, for example, reversing the shaping table 14 so that the side of the shaping table 14 on which the shaped object 50 is formed is directed toward the removal tank 60. Furthermore, in this case, the moving means 18 moves the shaped object 50 together with the support layer 52 toward the removal tank 60 by the reversing operation.

Furthermore, in the present example, after the shaping table 14 is reversed, as shown in FIG. 2C, the shaped object 50 and the support layer 52 are peeled off from the shaping table 14 by the peeling means 20. More specifically, in the present example, the peeling means 20 separates the shaped object 50 and the support layer 52 from the shaping table 14 by an operation of cutting automatically performed using, for example, a wire or the like. Furthermore, in this case, for example, it is conceivable to peel off the shaped object 50 and the support layer 52 by cutting a portion formed as a base in the support layer 52. According to such a structure, for example, the shaped object 50 and the support layer 52 can be appropriately peeled off from the shaping table 14. Furthermore, in this case, the shaped object 50 and the support layer 52 after being cut are accommodated in the removal tank 60 as shown in the figure, for example, by dropping downward. Therefore, according to the present example, for example, after the shaping of the shaped object 50 is completed, the shaped object 50 and the support layer 52 can be automatically and rapidly moved to the removal tank 60 without requiring manpower (manual work by operator, etc.) for the detachment operation from the shaping table 14, the transportation to the removal tank 60, and the like. Furthermore, for example, the removal of the support layer 52 can be appropriately started at an early stage after the completion of shaping. Moreover, the removal of the support layer 52, and the like can be more efficiently carried out, for example, by starting the removal of the support layer 52 at an early stage. In this case, for example, a need to stop the shaping operation of the shaping apparatus 10 for a long time in order to move the shaped object 50 and the like to the removal tank 60, and the like does not arise. Therefore, for example, the shaping of the shaped object 50 can be performed more efficiently and appropriately.

Here, in the present example, after reversing the shaping table 14 by the moving means 18, the shaped object 50 and the support layer 52 are peeled off from the shaping table 14 using the peeling means 20 to move the shaped object 50 and the support layer 52 to the removal tank 60. In this case, for example, the operation of the moving means 18 and the operation of the peeling means 20 described above may together be considered as an operation (operation of moving means) of moving the shaped object 50 and the like toward the removal tank 60. Moreover, as in the present example, when reversing the shaping table 14, the shaping may be further performed using a surface facing the head unit 12 side after the reversal.

More specifically, in this case, for example, as shown in FIG. 3A, the shaping of a new shaped object 50 is performed on a surface facing the head unit 12 in the shaping table 14 after the reversal while the removal of the support layer 52 at the periphery of the shaped object 50, which shaping has been completed first, is being carried out in the removal tank 60. In this case as well, the support layer 52 is formed on the lower side of the shaped object 50 or at the periphery of the shaped object 50 as necessary. Furthermore, in this case, the cleaning means 22 is used to clean the portion where the shaped object 50 and the support layer 52 are peeled off in the operation described with reference to FIG. 2C. Thus, the surface of the shaping table 14 facing the removal tank 60 becomes a state in which new shaping can be further carried out.

Furthermore, after the shaping operation shown in FIG. 3A is completed, the shaping table 14 is reversed again by the moving means 18 to move the shaped object 50 and the support layer 52 toward the removal tank 60. In this case, the newly shaped shaped object 50 and the support layer 52 are removed into the removal tank 60 by performing the operation similar to the operation described above with reference to FIGs. 2B and 2C. In this case, a plurality of shaped objects 50 can be sequentially shaped using both sides of the shaping table 14 by further repeating the operation described above. In this case, the movement of the shaped object 50 and the like to the removal tank 60, the peeling of the shaped object 50 and the like from the shaping table 14, the cleaning of the shaping table 14 and the like are automatically performed so that shaping can be continuously performed without stopping the operation of the shaping apparatus 10. Therefore, according to the present example, for example, a plurality of shaped objects 50 can be shaped efficiently and appropriately. In addition, the operation of the present example described above can be considered as, for example, as an operation of automatically repeating the operation of removing the support layer 52 on the lower surface side while performing shaping on the upper surface side of the shaping table 14, and the like.

Here, as described above, in the present example, the shaped object 50 and the support layer 52 are moved toward the removal tank 60 by reversing the shaping table 14. In this case, it is necessary to secure a space for rotating the shaping table 14 needs to be secured between the head unit 12 and the removal tank 60. Therefore, in the present example, at the time of rotation of the shaping table 14, for example, it is conceivable to secure a space necessary for rotation by appropriately moving a part of or all of the head unit 12, the shaping table 14, and the removal tank 60 in the layering direction. Furthermore, as described above, in the present example, a great number of shaped objects 50 can be sequentially shaped by using both sides of the shaping table 14. In this case, it is also conceivable to replace the removal tank 60 as needed. More specifically, in this case, for example, it is conceivable to replace the removal tank 60 every time the removal tank 60 accommodates a preset number of shaped objects 50 by using a removal tank installing means or the like that automatically installs the removal tank 60 at a predetermined position. Moreover, the specific structure for moving the shaped object 50 and the support layer 52 toward the removal tank 60 is not limited to the configuration described above, and various changes may be made. Therefore, various modified examples of the configuration of the shaping apparatus 10 will be described below.

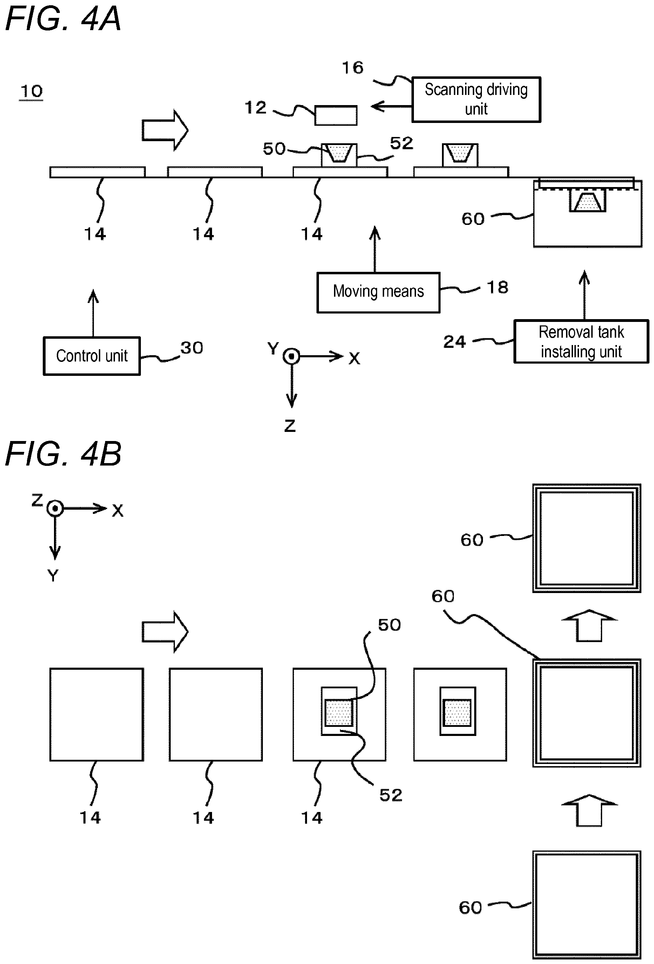

FIGs. 4A and 4B are views describing a modified example of the configuration of the shaping apparatus 10. FIGs. 4A and 4B are a side view and a top view showing one example of a configuration of a main part of the shaping apparatus 10 in the present modified example. Other than the points described below, in FIGs. 4A and 4B, the configuration denoted with the same reference numbers as FIGs. 1 to 3 may have a feature same as or similar to the configuration in FIGs. 1 to 3.

In the present example, the shaping apparatus 10 includes the head unit 12, the scanning driving unit 16, the moving means 18, the removal tank installing unit 24, and the control unit 30. Moreover, in addition to these structures, the shaping apparatus 10 shapes the shaped object 50 using the detachable tray-shaped shaping table 14. Furthermore, among the configurations described above, the removal tank installing unit 24 is an example of the removal tank installing means that installs the removal tank 60 in the removal tank installing position set in advance, and executes the replacement of the removal tank 60 by automatically and sequentially changing the removable tank 60 to be installed at the removal tank installing position at a predetermined timing.

Furthermore, more specifically, in the present modified example, the removal tank installing position is a position set as a position where the removal tank 60 is to be installed at a destination to where the shaped object 50 is moved by the moving means 18. Moreover, in this case, after the removal tank 60 installed at the removal tank installing position accommodates the shaped object 50, the removal tank installing unit 24 moves the removal tank 60 removal tank to a position other than the removal tank installing position. Another removal tank 60 that is to accommodate the next shaped object 50 is then installed at the removal tank installing position. According to such a configuration, for example, in the case of sequentially shaping a plurality of shaped objects 50, the support layer 52 can be more efficiently removed by using the plurality of removal tanks 60. Furthermore, in this case, the replacement of the removal tank 60 can be performed, for example, every time the removal tank 60 accommodates one shaped object 50. Moreover, the replacement of the removal tank 60 may not necessarily be performed for every single shaped object, and for example, may be performed at a time point the removal tank 60 accommodates a predetermined number of shaped objects 50.

Furthermore, as shown in the figure, in the present example, the removal tank installing position is set outside the position facing the head unit 12. Thus, the removal tank installing unit 24 installs the removal tank 60 outside the position facing each inkjet head in the head unit 12. In this case, the moving means 18 brings the shaped object 50 closer to the removal tank 60 by moving the shaped object 50 to the outside of the position facing the head unit 12 after the shaped object 50 is shaped at the position facing the head unit 12. Further, as described above, in the present example, the tray-shaped shaping table 14 is used. Then, the shaped object 50 and the support layer 52 are moved by moving the shaping table 14 in a state of supporting the shaped object 50 and the support layer 52. Furthermore, the shaped object 50 is accommodated in the removal tank 60 by reversing the shaping table 14 at the time point it is moved to the upper part of the removal tank 60. According to this configuration, for example, the shaped object 50 and the support layer 52 can be appropriately moved toward the removal tank 60. Furthermore, in this case, the shaped object 50 is separated from the shaping table 14 when the support layer 52 is dissolved in the removal tank 60. Therefore, after the support layer 52 is removed, the shaping table 14 can be reused.

Here, in the present modified example, it is conceivable to move the shaping table 14 using, for example, a conveyor means such as a belt member. Furthermore, in this case, as shown in the figure, the shaping of a new shaped object 50 is started after the shaped object 50 and the like are moved in accordance with the operation of automatically moving the shaped object 50 and the support layer 52 to the removal tank 60 using the moving means 18. In this case, for example, it is conceivable to continuously shape a plurality of shaped objects 50 by using a plurality of shaping tables 14 and sequentially facing the shaping tables to the head unit 12.

More specifically, in the present modified example, the moving means 18 installs the shaping table 14 at the head facing position before the shaping of each shaped object 50 is started. In this case, the head facing position is a position in the head unit 12 that faces each inkjet head. Then, after the completion of shaping, the moving means 18 moves the shaped object 50 toward the removal tank 60 while being supported by the shaping table 14. Furthermore, after the shaping table 14 supporting the shaped object 50 is moved from the head facing position toward the removal tank 60, the moving means 18 installs another shaping table 14 to be used at the time of shaping a next shaped object 50 at the head facing position. In this case, after the shaping table 14 supporting the shaped object 50 is moved from the head facing position toward the removal tank 60 does not necessarily mean after the shaped object 50 and the like are accommodated in the removal tank 60, and may be a timing at which the shaping table 14 starts to move toward the removal tank 60 and the next shaping table 14 can be installed at the head facing position. According to such a configuration, after the shaping of one shaped object 50 is completed, the operation of shaping the next shaped object 50 can be appropriately started. Furthermore, for example, the shaping of the plurality of shaped objects 50 can be more efficiently and appropriately carried out. Moreover, in the present modified example, as shown in FIG. 4B, for example, the removal tank installing unit 24 sequentially installs each removal tank 60 at the removal tank installing position by moving a plurality of removal tanks 60 in a direction orthogonal to the conveyance direction of conveying the shaping table 14 from the head facing position to the removal tank installing position. According to such a configuration, the removal tank 60 can be automatically and appropriately replaced.

Furthermore, as described above, in the present modified example, the shaping table 14 is moved using, for example, a conveyor means such as a belt member. On the other hand, in a further modified example of the configuration of the shaping apparatus 10, it is conceivable to shape the shaped object 50 directly on the belt member.

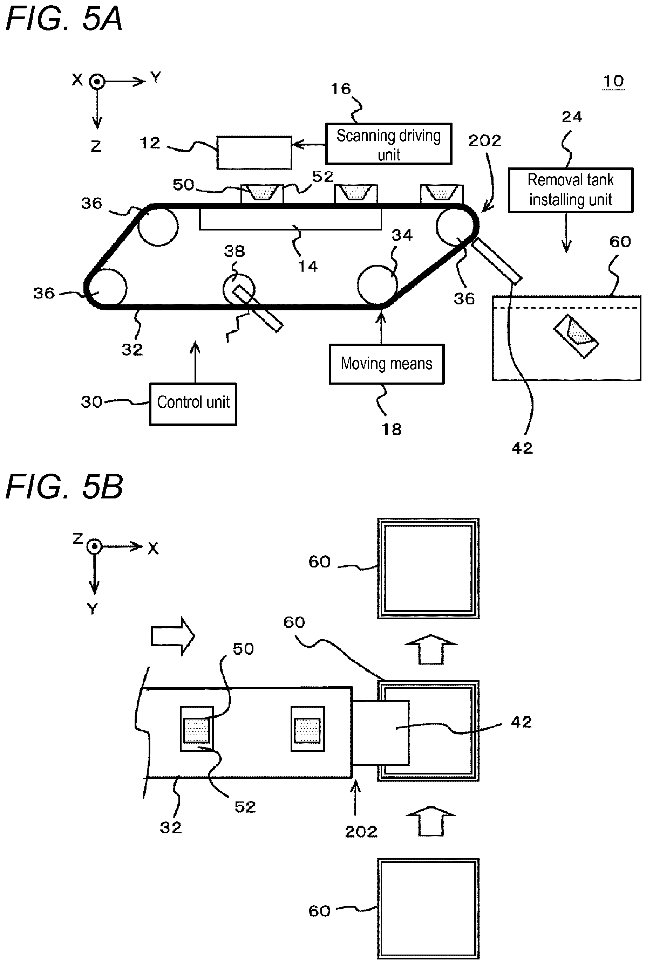

FIGs. 5A and 5B are views describing a further modified example of the configuration of the shaping apparatus 10. FIGs. 5A and 5B are a side view and a top view showing one example of a configuration of a main part of the shaping apparatus 10 in the present modified example. Other than the points described below, in FIGs. 5A and 5B, the configuration denoted with the same reference numbers as FIGs. 1 to 4 may have a feature same as or similar to the configuration in FIGs. 1 to 4.

In the present modified example, the shaping apparatus 10 includes the head unit 12, the shaping table 14, the scanning driving unit 16, the moving means 18, the removal tank installing unit 24, an endless belt 32, a driving roller 34, a plurality of driven rollers 36, a tension roller 38, and a separation plate 42. Furthermore, among these configurations, the endless belt 32 is an example of a belt member, and is installed so as to circle along a path including the position facing each inkjet head in the head unit 12. In this case, the endless belt 32 can be considered as, for example, an endless belt or the like in which at least a part thereof faces each inkjet head in the head unit 12. Further, in this case, as shown in the figure, the shaping table 14 is a table-shaped member installed at a position facing the head unit 12 with the endless belt 32 therebetween, and supports a region facing the head unit 12 in the endless belt 32. According to such a configuration, for example, deflection and the like can be appropriately prevented from occurring in the endless belt 32 by the influence of the weight of the shaped object 50 being shaped, and the like at the position facing the head unit 12. The shaping of the shaped object 50 thus can be more appropriately carried out at high precision.

Furthermore, in this case, each inkjet head in the head unit 12 forms the shaped object 50 and the support layer 52 on the endless belt 32 by ejecting the material of the shaped object 50 and the support layer 52 toward the endless belt 32. In this case, the moving means 18 moves the shaped object 50 and the support layer 52 together with the endless belt 32 by moving the endless belt 32 on which the shaped object 50 and the support layer 52 are mounted. Even in a case configured as above, for example, the shaped object 50 and the support layer 52 can be appropriately moved. More specifically, in the present modified example, the endless belt 32 is moved by rotationally driving the driving roller 34, which is a roller (feed roller) for moving the endless belt 32 by rotation, with the moving means 18. In this case, the moving means 18 moves the moving means 18 by, for example, rotating the driving roller 34 by the driving force of the motor. The moving means 18 thereby moves the shaped object 50 and the support layer 52 together with the endless belt 32. Furthermore, in the present modified example, the plurality of driven rollers 36 are rollers for setting the path of the endless belt 32, and rotate with the movement of the endless belt 32 at a predetermined position. Furthermore, in this case, at least one driven roller 36 is installed on the downstream side of the position facing the head unit 12 in the moving direction of the endless belt 32, thus forming a curved portion 202 in the endless belt 32.

In this case, the curved portion 202 is, for example, a portion (portion R) curved in the endless belt 32. Furthermore, in the present modified example, the removal tank 60 is disposed on the lower side of the curved portion 202 in the gravity direction, and the curvature of the curved portion 202 is set to a curvature (e.g., sufficiently small curvature) the shaped object 50 and the support layer 52 separate from the endless belt 32 when passing the curved portion 202. According to such configuration, for example, the curved portion 202 of the endless belt 32 can be used to separate the shaped object 50 and the support layer 52 from the endless belt 32 when passing the curved portion 202. Thus, for example, the shaped object 50 or the like can be appropriately detached from the curved portion 202 and dropped into the removal tank 60. Thus, in the present modified example as well, the shaped object 50 and the support layer 52 can be moved and appropriately accommodated in the removal tank 60. Moreover, in the present modified example as well, removal of the support layer 52 can be performed efficiently and appropriately.

Further, in the present modified example, a tension roller 38 is a roller for applying a predetermined tension to the endless belt 32, and applies tension to the endless belt 32 by coming into contact with the endless belt 32 while receiving a biasing force of a spring, and the like. Furthermore, the separation plate 42 is a plate-like member installed to make contact with the shaped object 50 or the support layer 52 at the position of the curved portion 202. In the curved portion 202, the shaped object 50 and the like can be more reliably detached from the endless belt 32 by using the separation plate 42. In this case, it is also conceivable to use the separation plate 42 as a guide member for causing the shaped object 50 and the like separated from the endless belt 32 to fall into the removal tank 60. Furthermore, as shown in FIG. 5B, in the present modified example as well, the removal tank 60 is sequentially replaced using the removal tank installing unit 24. In this case, it is conceivable to set the position where the shaped object 50 or the like detached from the endless belt 32 in the curved portion 202 falls as the removal tank installing position, and install each of the plurality of removal tanks 60 in order.

Here, as described above with reference to FIGs. 1A and 1B, at the time of the shaping of the shaped object 50, the scanning driving unit 16 causes the head unit 12 to perform the layering direction scanning in accordance with the progress of the shaping operation. In this case, for example, the position of the head unit 12 in the layering direction may be fixed, and the side of the shaping table 14 or the like may be moved in the layering direction. On the other hand, when using the endless belt 32 and the like in addition to the shaping table 14 as in the present example, if the side of the shaping table 14 is moved, consideration is made to move the endless belt 32, the driving roller 34, the driven roller 36, the tension roller 38, the separation plate 42, and the like with the shaping table 14. Moreover, in this case, the removal tank 60 may be moved together as necessary. Furthermore, at the time of the layering direction scanning, the head unit 12 side may be moved instead of moving the shaping table 14 and the like in the layering direction.

When using the endless belt 32 as in the present modified example, preferably, the shaped object 50 and the support layer 52 are appropriately and sufficiently brought into close contact with the endless belt 32 at the time of shaping at the position facing the head unit 12, and the shaped object 50 and the support layer 52 are easily detached at the time of detachment in the curved portion 202. In this case, it is conceivable to use, for example, a mesh-like member formed with a plurality of holes as the endless belt 32. In this case, the mesh-like refers to, for example, a state in which a large number of holes are formed side by side. Furthermore, as such an endless belt 32, for example, it is conceivable to use a belt member in which at least the surface is made of stainless steel (SUS).

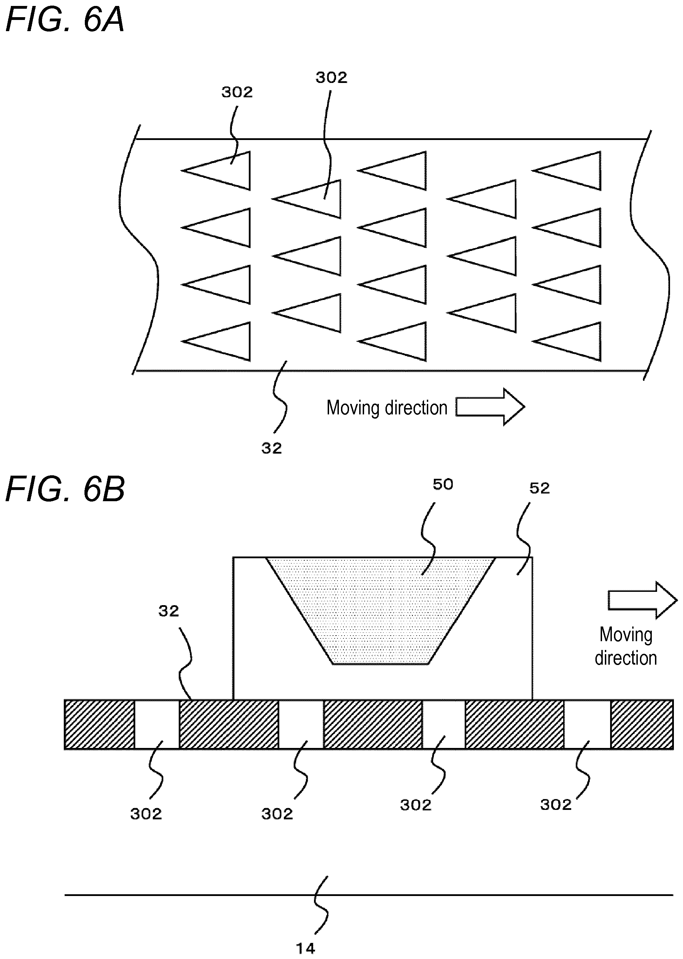

FIGs. 6A and 6B are views showing one example of a more specific configuration of the endless belt 32, and shows one example of a configuration of the endless belt 32 used in the shaping apparatus 10 described with reference to FIGs. 5A and 5B. FIGs. 6A and 6B are a top view and a side cross-sectional view of the endless belt 32, respectively. Moreover, in FIG. 6B, an example of the cross section of the endless belt 32 in the present modified example is shown with the shaped object 50, the support layer 52, and the shaping table 14. As shown in the figure, in the present modified example, the endless belt 32 is a mesh-like member formed with a plurality of holes 302. Furthermore, in this case, a hole having a size that allows at least the material of the support layer 52 to pass therethrough is formed as each hole 302. Moreover, as also illustrated in FIGs. 5A and 5B, in the present modified example, the endless belt 32 is installed so that one part thereof overlaps with the shaping table 14. In this case, when referring to the material of the support layer 52 being able to pass through, for example, it can be considered as the material of the support layer 52 ejected to the portion of the hole 302 passing through the hole 302 and making contact with the shaping table 14, and the like. Furthermore, when the material of the shaped object 50 is directly ejected onto the endless belt 32, the hole 302 can be considered as a hole or the like having a size that allows the material of the shaped object 50 and the support layer 52 to pass therethrough.

When configured in this manner, the support layer 52 or the shaped object 50 (e.g., the base portion formed by the support layer 52) on the endless belt 32 adheres to the endless belt 32 only at the portion without the hole 302, and adheres to the shaping table 14 at the portion with the hole 302. In this case, while shaping the shaped object 50 at a position facing the head unit 12, each position of the lowermost portion in the support layer 52 and the like becomes a state of being adhered to either the endless belt 32 or the shaping table 14. Therefore, in this case, the adhesion of the shaped object 50 and the support layer 52 to the endless belt 32 can be appropriately enhanced while performing shaping. Furthermore, for example, the shaped object 50 and the support layer 52 can be appropriately held on the endless belt 32 by enhancing the adhesion. Moreover, for example, the occurrence of warpage or the like in the layer of ink formed at the time of forming the shaped object 50 can be appropriately prevented.

Further, in this case, in the stage when the shaping operation at the position facing the head unit 12 is completed, the moving means 18 (see FIGs. 5A and 5B) moves the endless belt 32 toward the removal tank 60 (see FIGs. 5A and 5B) while fixing the position of the shaping table 14. In this case, the portion of the lowermost portion of the support layer 52 and the like adhered to the shaping table 14 is peeled off from the shaping table 14 with the movement of the endless belt 32. Furthermore, as a result, at the time point of detaching the shaped object 50 and the like from the endless belt 32 at the curved portion 202 (see FIGs. 5A and 5B) and the like of the endless belt 32, the adhesion of the shaped object 50 and the support layer 52 with respect to the endless belt 32 becomes low compared to, for example, a case in which an endless belt 32 not formed with the hole 302 is used. Therefore, according to the present modified example, for example, when detaching the shaped object 50 or the like from the endless belt 32, the removal can be performed more easily and appropriately. Moreover, for example, the operation of automatically detaching the shaped object 50 or the like from the endless belt 32 and accommodating it in the removal tank 60 can be performed more reliably.

Here, in the present modified example, the endless belt 32 can also be considered as, for example, a peeling off belt or the like that facilitates peeling of the shaped object 50 or the like. In this case, it is conceivable to use a member having different adhesive property with respect to the material of the shaped object 50 and the material of the support layer 52 as the shaping table 14 and the endless belt 32. When configured in this way, for example, the adhesive property of the shaped object 50 and the support layer 52 with respect to the base portion formed by the endless belt 32 and the shaping table 14 can be adjusted by appropriately changing the density, size, and the like of the holes 302. In this case, the base portion can be considered as, for example, a portion in the shaping table 14 and the endless belt 32 that makes contact with the shaped object 50 or the support layer 52.

More specifically, in this case, regarding the adhesive property with respect to the material of the shaped object 50 and the support layer 52 (particularly, adhesive property with respect to the support layer 52), the adhesive property of the shaping table 14 is preferably made larger than the adhesive property of the endless belt 32. When configured in such a manner, for example, the detachment of the shaped object 50 and the like to be performed after peeling off the shaped object 50 and the support layer 52 from the shaping table 14 can be facilitated while holding the shaped object and the like with high adhesion at the time of shaping of the shaped object 50 or the shaped object 50 adhered with the support layer 52 with respect to the shaping table 14.

In this case, it is also conceivable to use, for example, a member or the like that repels the material or the like of the support layer 52 (e.g., material of the shaped object 50 and material of the support layer 52) as the endless belt 32. In this case, if only the endless belt 32 simply formed with the hole 302 is used without using the shaping table 14, for example, the support layer 52 and the like may not be properly formed on the endless belt 32. On the other hand, in the present modified example, the shaping table 14 is installed at a position facing the head unit 12 with the endless belt 32 in between, and the material and the like of the support layer 52 is brought into contact with the shaping table 14 through the holes 302, so that the support layer 52 and the like can be appropriately formed even when such an endless belt 32 is used. Moreover, the shaped object 50 and the support layer 52 thus can be appropriately held at the time of shaping. In addition, after the endless belt 32 is moved and the shaped object 50 and the support layer 52 are peeled off from the shaping table 14, the shaped object 50 and the like can be more easily detached from the endless belt 32.

Furthermore, in this case, the shape of the holes 302 constituting the mesh in the endless belt 32 is preferably a shape in which the support layer 52 and the like can be easily peeled off from the shaping table 14 during the movement of the endless belt 32. More specifically, in this case, each of the plurality of holes 302 of the endless belt 32 is preferably formed to a tapered hole like, for example, a triangular hole 302 shown in the figure. In this case, the tapered holes are, for example, holes tapered such that the width in the direction orthogonal to the moving direction in which the moving means 18 moves the endless belt 32 gradually widens from one side to the other side in the moving direction. The width of the hole 302 is, for example, the width at the opening of the hole 302 (e.g., opening of the hole 302 in the surface facing the head unit 12). In this case, the moving direction is the moving direction in a case in which the shaped object 50 is moved toward the removal tank 60. Furthermore, more specifically, in the present modified example, the respective holes 302 are through holes whose shapes at the respective positions are the same in the depth direction. Furthermore, each hole 302 is a tapered hole in which the width gradually widens from the back side toward the front side in the moving direction. Such a hole 302 can be considered as, for example, a tapered hole or the like in which the back side becomes thinner in the moving direction of the endless belt 32. According to such a configuration, for example, a portion of the support layer 52 or the like in the hole 302 can be easily and appropriately peeled off from the shaping table 14 by moving the endless belt 32. Moreover, for example, the shaped object 50 and the like can be more appropriately peeled off from the shaping table 14.

Furthermore, depending on the material of endless belt 32, the properties of the material of the support layer 52, and the like, consideration is made to use a tapered hole whose front side becomes thinner in the moving direction, with the direction of the tapered hole 302 being opposite to the above. Furthermore, depending on the conditions and the like required at the time of shaping, consideration is made to have the adhesive property of the shaping table 14 larger than the adhesive property of the endless belt 32 in relation to the adhesive property with respect to the material of the support layer 52 and the like. Even in such a case as well, for example, the detachment of the shaped object 50 and the like from the endless belt 32 is more facilitated by using the endless belt 32 having the holes 302. For example, the adhesive property of the shaped object 50 and the support layer 52 with respect to the base portion can be appropriately adjusted.

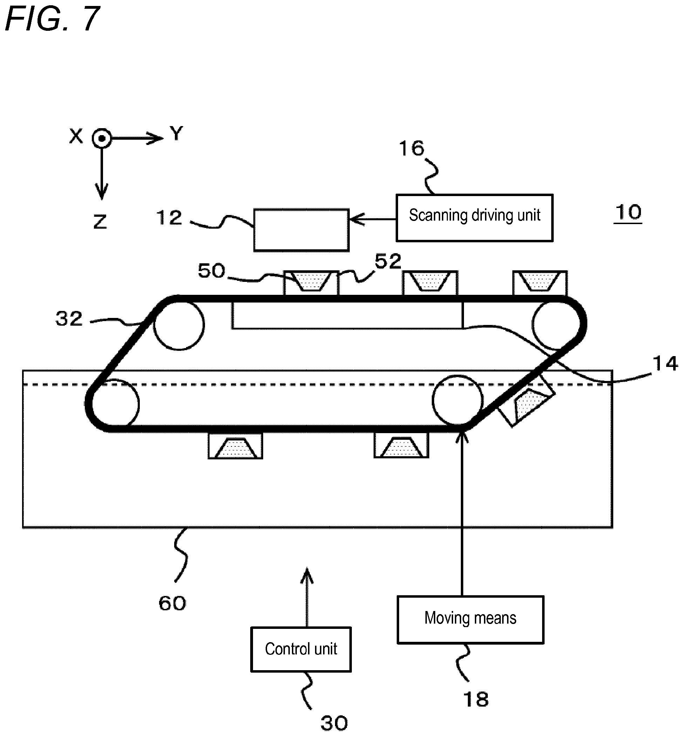

In the case of moving the shaped object 50 and the like using the endless belt 32, it is conceivable to remove the support layer 52 without detaching the shaped object 50 or the like from the endless belt 32 in a further modified example of the configuration of the shaping apparatus 10. FIG. 7 is a view describing a further modified example of the configuration of the shaping apparatus 10, and shows one example of the configuration of the main part of the shaping apparatus 10 in the present alternative embodiment. Other than the points described below, in FIG. 7, the configuration denoted with the same reference numbers as FIGs. 1 to 6 may have a feature same as or similar to the configuration in FIGs. 1 to 4.

In the present modified example as well, the shaping apparatus 10 moves the shaped object 50 and the support layer 52 formed at the position facing the head unit 12 using the endless belt 32. However, in this case, the shaped object 50 and the support layer 52 are moved to the back surface side of the shaping table 14 without being peeled off from the endless belt 32 in the middle. In this case, the back surface side of the shaping table 14 is the side of the surface farther from the head unit 12 in the shaping table 14. Further, in the present modified example, the removal tank 60 is installed on the back surface side of the shaping table 14 so that a part of the endless belt 32 passes therein.

With this configuration, for example, the shaped object 50 and the support layer 52 can be moved into the removal tank 60 without detaching the shaped object 50 and the like from the endless belt 32. Furthermore, the shaped object 50 and the support layer 52 thus can be immersed in water, which is liquid that dissolves the support layer 52, to appropriately remove the support layer 52. Therefore, in the present modified example as well, the support layer 52 can be efficiently and appropriately removed. In this case, the shaped object 50 and the like can be appropriately detached from the endless belt 32 in the removal tank 60 by dissolving the support layer 52 while moving through the removal tank 60. Moreover, a new shaped object 50 can be appropriately shaped at the timing a location from which the shaped object 50 and the like were detached again moved to the position facing the head unit 12.

In the description made above, the example of a case in which the removal of the support layer 52 is completed in the removal tank 60 has been mainly described for the removal tank 60. Moreover, as an example of a preferred configuration in such a case, the example of a case in which water, which is a liquid, is stored has been described for the removal tank 60. However, in the removal tank 60, the removal of the support layer 52 is not necessarily completed, and consideration is made to soften the support layer 52 to, for example, facilitate the removal of the support layer 52 to be subsequently performed. In such a case as well, it can also be considered that the removal tank 60 at least temporarily accommodates the shaped object 50, for example, during the operation related to the removal of the support layer 52. As a result, the removal tank 60 can also be considered as, for example, a container that accommodates the shaped object 50 at the time of removal of the support layer 52.

In this case, it is also conceivable to use the removal tank 60 in a method other than storing the liquid. More specifically, for example, in the case of using the material of the support layer 52 that dissolves in water as in the configurations described above, the support layer 52 can be softened by bringing the support layer 52 into contact with water vapor (steam). Therefore, in such a case, for example, it is also conceivable to use a container (e.g., steam tank) that softens the support layer 52 with water vapor for the removal tank 60.

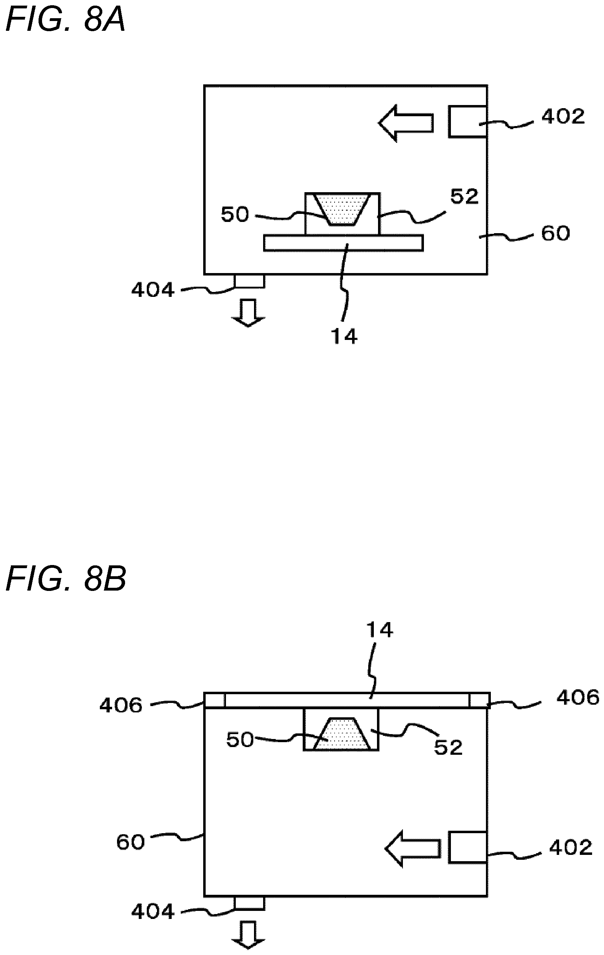

FIGs. 8A and 8B are views describing a modified example of the configuration of the removal tank 60, and shows an example of the configuration of the removal tank 60 in the case where the support layer 52 is softened using water vapor. FIG. 8A shows one example of the configuration of the removal tank 60 in a case where the support layer 52 is softened using water vapor. In the present modified example, the removal tank 60 includes a vapor generator 402 and a drainage port 404. The vapor generator 402 is configured to supply water vapor to the inside of the removal tank 60. With such a configuration, for example, the water vapor can be appropriately supplied into the removal tank 60. Moreover, the drainage port 404 has a structure for draining the water liquefied in the removal tank 60. In this case, for example, a container having a drainage port 404 on the lower side in the gravity direction is preferably used as the removal tank 60. According to such a configuration, for example, drainage from the removal tank 60 can be performed appropriately.

Furthermore, in this case, for example, it is conceivable to perform the shaping of the shaped object 50 using the tray-shaped shaping table 14 and move the shaped object 50 and the support layer 52 into the removal tank 60 with the shaping table 14 by the moving means 18 (see FIGs. 4A and 4B) by using the shaping apparatus 10 having a configuration same as or similar to the configuration described with reference to FIGs. 4A and 4B excluding one part. With this configuration, for example, the shaped object 50 and the support layer 52 can be appropriately moved into the removal tank 60.

Furthermore, in this case, consideration is made to, after softening the support layer 52 by bringing the support layer 52 into contact with water vapor, take out the shaped object 50 and the support layer 52 from the removal tank 60, and complete the removal of the support layer 52 at the exterior of the removal tank 60. In this case, for example, it is conceivable to automatically move the shaped object 50 and the support layer 52 together with the shaping table 14 to a storage place such as a rack, and then complete the removal of the support layer 52 manually by an operator or the like. According to the present modified example, for example, the removal of the support layer 52 performed thereafter can be easily and efficiently performed by softening the support layer 52 in advance. In this case, after the removal of the support layer 52 is completed, the detached shaped object 50 is collected. Then, it is conceivable to perform the shaping of a new shaped object 50 by reusing the shaping table 14 from which the shaped object 50 and the support layer 52 have been detached.

Moreover, in the modified example of the manner of removing the support layer 52, for example, consideration is made to, after softening the support layer 52 in the removal tank 60 using water vapor, automatically move the shaped object 50 to the removal tank 60 that stores water. Furthermore, consideration is also made to complete the removal of the support layer 52 in the removal tank 60 using water vapor depending on the properties of the material of the support layer 52.

In addition, as shown in FIG. 8B, for example, it is conceivable to use the shaping table 14 as a lid for closing the opening of the removal tank 60. FIG. 8B shows another example of the configuration of the removal tank 60 in a case where the support layer 52 is softened using water vapor. In this case, for example, the moving means 18 reverses the shaping table 14 with the side on which the shaped object 50 is formed in the shaping table 14 facing the removal tank 60 side to move the shaped object 50 toward the removal tank 60 along with the support layer 52. In this case, as shown in the figure, the shaping table 14 is installed on the upper part of the removal tank 60 so as to close the opening at the upper part of the removal tank 60. Moreover, in this case, the removal tank 60 preferably further includes a sealing member 406 for closing the gap between the shaping table 14 and the removal tank 60. In this case as well, water vapor is supplied into the removal tank 60 using the vapor generator 402, and drainage is appropriately performed using the drainage port 404. Even with this configuration, for example, the support layer 52 can be appropriately removed using the water vapor.

As described above, the removal tank 60 using water vapor is, for example, considered to be used in the shaping apparatus 10 having a configuration same as or similar to the configuration described with reference to FIGs. 4A and 4B excluding one part. In this case as well, it is conceivable to appropriately replace the removal tank 60 in a manner same as or similar to the case described with reference to FIGs. 4A and 4B. According to this configuration, for example, the plurality of shaped objects 50 can be shaped efficiently and appropriately. Moreover, the removal tank 60 that uses water vapor is considered to be used in a configuration same as or similar to the shaping apparatus 10 having another configuration. In this case, for example, it is conceivable to use the removal tank 60 shown in FIG. 8B in the configuration same as or similar to the shaping apparatus 10 described with reference to FIGs. 1A and 1B. In addition, it is conceivable to use the removal tank 60 that uses water vapor in a configuration same as or similar to the shaping apparatus 10 described with reference to FIGs. 5 and 7, for example, by deforming the configuration of one part, as necessary.

### INDUSTRIAL APPLICABILITY

The present disclosure can be suitably used, for example, in a shaping apparatus.

## Claims

1. A shaping apparatus for shaping a three-dimensional shaped object, the shaping apparatus comprising:
a shaping material head for ejecting a material of the shaped object;
a support material head for ejecting a material of a support layer that supports at least one part of the shaped object being shaped; and
a moving means for moving the shaped object together with the support layer toward a removal tank, which is a container for accommodating the shaped object at the time of removing the support layer.

2. The shaping apparatus according to claim 1, wherein
the moving means is configured to install a shaping table for supporting the shaped object being shaped at a head facing position which is a position facing the shaping material head and the support material head, and moves the shaped object toward the removal tank while being supported by the shaping table; and
after the shaping table supporting the shaped object is moved from the head facing position toward the removal tank, the moving means install another shaping table to be used at the time of shaping a next shaped object at the head facing position.

3. The shaping apparatus according to claim 2, further comprising:
a removal tank installing means for installing the removal tank at a removal tank installing position set as a position to install the removal tank at a destination to move the shaped object by the moving means; wherein
after the removal tank installed at the removal tank installing position accommodates the shaped object, the removal tank installing means moves the removal tank to a position other than the removal tank installing position, and installs another removal tank to accommodate the next shaped object at the removal tank installing position.

4. The shaping apparatus according to any one of claims 1 to 3, wherein
shaping is performed using a shaping table for supporting the shaped object being shaped;
the shaping material head and the support material head are configured to eject the material of the shaped object and the material of the support layer at a position facing the shaping table to form the shaped object and the support layer on the shaping table;
the removal tank is installed on a side opposite to the shaping material head and the support material head with respect to the shaping table; and
the moving means is configured to reverses the shaping table so that a side on which the shaped object is formed in the shaping table faces the removal tank to move the shaped object together with the support layer toward the removal tank.

5. The shaping apparatus according to claim 4, wherein the removal tank is installed at a position facing the shaping material head and the support material head with the shaping table interposed therebetween.

6. The shaping apparatus according to claim 4, wherein
the removal tank is installed on an outer side of the position facing the shaping material head and the support material head; and
the moving means is configured to reverse the shaping table after moving the shaping table in a state of supporting the shaped object to the outer side of the position facing the shaping material head and the support material head.

7. The shaping apparatus according to any one of claims 1 to 3, further comprising
a belt member in which at least one part faces the shaping material head and the support material head,
the shaping material head and the support material head are configured to form the shaped object and the support layer on the belt member by ejecting the material of the shaped object and the material of the support layer toward the belt member,
the moving means is configured to move the shaped object and the support layer together with the belt member by moving the belt member on which the shaped object and the support layer are mounted, and
the belt member is a member formed with a plurality of holes through which at least the material of the support layer passes.

8. The shaping apparatus according to any one of claims 1 to 7, further comprising
a shaping table which is a table-shaped member that faces the shaping material head and the support material head with the belt member interposed therebetween; wherein
the belt member is installed so that one part overlaps the shaping table so that the material of the support layer that passed through the hole makes contact with the shaping table; and
each of the plurality of holes of the belt member is a tapered hole in which a width in a direction orthogonal to a moving direction in which the moving means moves the belt member gradually widens from one side to the other side in the moving direction.

9. The shaping apparatus according to claim 8, wherein the tapered hole is a hole in which the width gradually widens from a back side toward a front side in the moving direction in a case in which the shaped object is moved toward the removal tank.

10. The shaping apparatus according to any one of claims 1 to 3, further comprising
a belt member in which at least one part faces the shaping material head and the support material head; wherein
the shaping material head and the support material head are configured to form the shaped object and the support layer on the belt member by ejecting the material of the shaped object and the material of the support layer toward the belt member,
the moving means moves the shaped object and the support layer together with the belt member by moving the belt member on which the shaped object and the support layer are mounted, and
the belt member is an endless belt that circles along a path including the position facing the shaping material head and the support material head, and moves with the shaped object so that the shaped object falls into the removal tank when passing a curved portion in the path.

11. The shaping apparatus according to any one of claims 1 to 3, wherein the removal tank is a container in which at least the support layer is softened by water vapor.

12. The shaping apparatus according to claim 11, wherein the removal tank includes a drainage port on the lower side in the gravity direction.

13. A shaping method that shapes a three-dimensional shaped object, the method comprising the steps of
shaping a shaped object using a shaping material head that ejects a material of the shaped object;
forming a support layer using a support material head that ejects a material of the support layer that supports at least one part of the shaped object being shaped; and
moving the shaped object together with the support layer toward a removal tank, which is a container for accommodating the shaped object at the time of removing the support layer by a moving means.
